# EUROPÄISCHE PATENTANMELDUNG

(11) **EP 3 940 010 A1**
(43) Veröffentlichungstag der Anmeldung: **19.01.2022**
(21) Anmeldenummer: 21187001.9
(22) Anmeldetag: 22.05.2019
(51) Int. Cl.: C08F 293/00, C08F 290/06, C04B 24/16, C04B 24/26, C04B 28/02, C04B 24/24, C04B 103/40

(54) **VERFAHREN ZUR HERSTELLUNG VON WOHLDEFINIERTEN KAMMPOLYMEREN**

(30) Priorität: 31.05.2018 EP 18175429
(62) Teilanmeldung aus: 19724855.2
(71) Anmelder: Sika Technology AG, 6340 Baar (CH)
(72) Erfinder: Hampel, Christina, 5406 Rütihof (CH); Weidmann, Jürg, 8404 Winterthur (CH); Friederich, Markus, 8952 Schlieren (CH); Zimmermann, Jörg, 8400 Winterthur (CH)
(74) Vertreter: Sika Patent Attorneys

(57) **Zusammenfassung**

Die vorliegende Erfindung betrifft ein Verfahren zur Herstellung von verbesserten Kammpolymeren mit Block- oder Gradientenstruktur. Die Kammpolymere eignen sich sehr gut zur Dispergierung von feinen Pulvern.

## Beschreibung

### Technisches Gebiet

Die Erfindung betrifft ein Verfahren zur Herstellung von wohldefinierten Kammpolymeren mit Block- oder Gradientenstruktur sowie ihre Verwendung als Dispergiermittel.

### Stand der Technik

Kammpolymere werden seit vielen Jahren als Superverflüssiger in der Betonverarbeitung eingesetzt. Dadurch können die Betoneigenschaften wie beispielsweise die Verarbeitbarkeit und Festigkeit verbessert werden. Solche Kammpolymere verfügen typischerweise über ein Polymerrückgrat mit daran gebundenen Säuregruppen und Polyether-Seitenketten. Die Kammpolymere werden üblicherweise mittels freier radikalischer Copolymerisation von Monomeren die Säuregruppen enthalten und von Monomeren die Polyetherketten enthalten hergestellt. Kammpolymere können auch durch polymeranaloge Veresterung von Carboxylgruppen in Polycarboxylaten, beispielsweise Polymethacrylsäure, mit einseitig verschlossenen Polyethern erhalten werden. In all diesen Kammpolymeren liegen die Säuregruppen und die Seitenketten entlang des Polymerrückgrates statistisch verteilt vor.

Neben den Kammpolymeren mit statistischer Verteilung der Monomereinheiten gibt es neu auch Kammpolymere mit nicht-statistischer Verteilung der Säuregruppen und der Seitenketten entlang des Polymerrückgrades, beispielsweise Kammpolymere mit Block- oder Gradientenstruktur.

WO 2015/144886 beschreibt ein Blockcopolymer aus Säuregruppen enthaltenden Monomeren und Polyetherketten umfassenden Monomeren als Dispergiermittel für mineralische Bindemittelzusammensetzungen. Das Blockcopolymer enthält einen Block der Säuregruppen enthaltende Monomere aufweist und weniger als 25 Mol-% Polyetherketten umfassende Monomere, und einen Block der Polyetherketten umfassende Monomere aufweist und weniger als 25 Mol-% Säuregruppen enthaltende Monomere.
WO 2017/050907 beschreibt ein Copolymer mit Gradientenstruktur als Dispergiermittel für mineralische Bindemittelzusammensetzungen. Das Copolymer umfasst ionisierbare Monomereinheiten und Seitenketten-tragende Monomereinheiten.

Für die Herstellung von Kammpolymeren mit Block- oder Gradientenstruktur die Polyalkylenglykol-Seitenketten umfassen eignen sich Polyalkylenglykol-(meth)acrylate speziell gut.

Die WO 2006 024538 beschreibt ein Verfahren zur Herstellung von Polyalkylenglykol(meth)acrylaten durch Umsetzung von (Meth)acrylsäureanhydrid mit einer wenigstens eine OH-Gruppe tragenden Polyalkylenglykolverbindung im Molverhältnis von 1:1 bis 1.095:1. Bei dieser Umsetzung entsteht pro Mol reagiertem (Meth)acrylsäureanhydrid ein Mol freie (Meth)acrylsäure. Die EP 0 884 290 beschreibt ein Verfahren zur Herstellung von Polycarbonsäuren indem ein Polyalkylenglykol mit einem Überschuss an Methacrylsäure verestert wird und das Reaktionsgemisch, enthaltend das Polyalkylenglykol(meth)acrylat und Methacrylsäure, anschliessend polymerisiert wird.

Viele kommerzielle Polyalkylenglykol(meth)acrylate in technischer Qualität enthalten 5 Gewichts-% oder mehr an Methacrylsäure.

Die Entfernung der Methacrylsäure aus der Reaktionsmischung, typischerweise durch Destillation, bedeutet einen Mehraufwand, was die Kosten für das Polyalkylenglykol(meth)acrylat und damit für das daraus hergestellte Kammpolymer deutlich erhöht. Die hohe Temperatur, die für die Destillation notwendig ist, kann auch zu unerwünschten Nebenprodukten, beispielsweise Dimethacrylaten, führen, welche die Eigenschaften der damit hergestellten Polymere, insbesondere ihre Wirkung als Dispergiermittel, verschlechtern.

Es besteht daher weiterhin der Bedarf nach Kammpolymeren mit Block- oder Gradientenstruktur mit verbesserten Eigenschaften und verbesserten, kostengünstigen Verfahren zu deren Herstellung.

### Darstellung der Erfindung

Aufgabe der vorliegenden Erfindung ist es, ein Verfahren zur Verfügung zu stellen, womit Kammpolymere mit Block- oder Gradientenstruktur mit verbesserten Eigenschaften hergestellt werden können. Die Kammpolymere sollen als Dispergiermittel für feine Pulver, insbesondere anorganische Bindemittelzusammensetzungen, eingesetzt werden können. Das Verfahren soll weiter kostengünstig sein.

Überraschenderweise wird diese Aufgabe durch ein Verfahren, wie in Anspruch 1 beschrieben, gelöst.

Es hat sich überraschenderweise gezeigt, dass Kammpolymere, die mit dem erfindungsgemässen Verfahren hergestellt wurden, eine verbesserte Wirkung als Dispergiermittel haben.
So zeigen die Kammpolymere mit Block- oder Gradientenstruktur, welche in mindestens einem Abschnitt Polyalkylenglykol-Seitenketten aufweisen und in diesem Abschnitt keine oder nur sehr wenige Säuregruppen enthalten, eine bessere Dispergierwirkung für anorganische Pulver, insbesondere für hydraulisch abbindende Baumaterialien, als Kammpolymere mit Block- oder Gradientenstruktur, die in dem Abschnitt, der die Polyether-Seitenketten aufweist, Säuregruppen enthalten.

Überraschenderweise können verbesserte Kammpolymere erhalten werden, wenn für die Herstellung eine Monomermischung eingesetzt wird, welche ein Polyalkylenglykol(meth)acrylat enthält, das durch ein Verfahren hergestellt wurde, in dem weder (Meth)acrylsäure noch das Anhydrid der (Meth)acrylsäure eingesetzt wurden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Verfahren zur Herstellung von Kammpolymeren mit Block- oder Gradientenstruktur. Insbesondere wird mindestens ein Abschnitt **A** des Kammpolymers durch Polymerisation einer Monomermischung **M,** umfassend ein Polyalkylenglykol(meth)acrylat, gebildet wird, wobei die Monomermischung **M** weniger als 2 Gewichts-% (Meth)acrylsäure, bezogen auf das Gewicht des in der Monomermischung **M** vorhandenen Polyalkylenglykol(meth)acrylats, aufweist.

Bevorzugt weist die Monomermischung **M** weniger als 1.8 Gewichts-%, mehr bevorzugt weniger als 1.6 Gewichts-%, speziell bevorzugt weniger als 1.4 Gewichts-%, insbesondere weniger als 1.2 Gewichts-%, im Speziellen 0.9 Gewichts-% oder weniger, (Meth)acrylsäure, bezogen auf das Gewicht des in der Monomermischung **M** vorhandenen Polyalkylenglykol(meth)acrylats, auf. Eine solche Monomermischung **M** ist speziell gut geeignet um wohldefinierte Block- und Gradientenpolymere herzustellen.

Durch die Polymerisation der Monomermischungen **M,** können Kammpolymere mit mindestens einem Polymerabschnitt **A** erhalten werden, welcher nur wenige oder keine Säuregruppen aufweist, was die Eigenschaften der Kammpolymere, insbesondere als Dispergiermittel für anorganische Pulver, deutlich verbessert.

Unter "(Meth)acrylat" wird im vorliegenden Dokument sowohl ein Ester der Methacrylsäure als auch ein Ester der Acrylsäure verstanden.
Entsprechend wird unter "(Meth)acrylsäure" sowohl Methacrylsäure als auch Acrylsäure verstanden.
Unter "einseitig verschlossenes Polyalkylenglykol" wird im vorliegenden Dokument ein Polyalkylenglykol verstanden, das an einem Ende eine Hydroxylgruppe und am anderen Ende eine nicht-reaktive Gruppe, wie beispielsweise eine Alkoxy-, Cycloalkoxy- oder Alkylaryloxygruppe, aufweist.
Unter "Kammpolymer" wird im vorliegenden Dokument ein Polymer verstanden, das ein weitgehend lineares Polymerrückgrat und Seitenketten umfasst. Unter "weitgehend linear" wird im vorliegenden Dokument eine Polymerkette verstanden, die keine bewusst eingeführten Verzweigungen enthält.
Unter "Kammpolymer mit Block- oder Gradientenstruktur" wird im vorliegenden Dokument ein Kammpolymer verstanden, in dem die Monomereinheiten in nicht-statistischer Abfolge vorliegen, das heisst die Abfolge wird nicht zufällig erhalten. Eine solche Abfolge wird nicht unter den üblichen Bedingungen einer freien radikalischen Copolymerisation oder einer polymeranalogen Umsetzung erhalten. Wenigstens eine Monomereinheit ist bei der nicht-statistischen Abfolge in mindestens einem Abschnitt des Polymerrückgrates angereichert.
Unter "Abschnitt" oder "Abschnitt der Polymerkette" wird im vorliegenden Dokument ein Teil des Polymerrückgrates inklusive der dazugehörigen Seitengruppen verstanden. Bei Block- oder Gradientenpolymeren ist die Abfolge der Monomeren entlang des Polymerrückgrates nicht statistisch. Das heisst, dass unterschiedliche Abschnitte unterschiedliche Anteile der im Polymer vorhandenen Monomereinheiten aufweisen.
Unter "Monomermischung" wird im vorliegenden Dokument eine Lösung, eine Flüssigkeit oder ein Feststoff verstanden umfassend mindestens ein radikalisch polymerisierbares Monomer.

Das Polyalkylenglykol(meth)acrylat der Monomermischung **M** weist bevorzugt eine Struktur der Formel I auf, 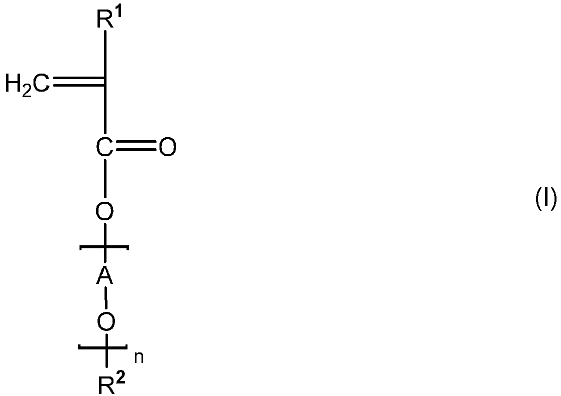 wobei
R¹, jeweils unabhängig voneinander, für H oder -CH₃ steht,
R², jeweils unabhängig voneinander für H, eine C₁- bis C₂₀-Alkylgruppe, -Cyclohexylgruppe oder -Alkylarylgruppe steht,
A für C₂-C₄-Alkylen steht, und
n = 2 bis 250.

Vorteilhaft steht [A-O]ₙ für Polyethylenglykol, Polypropylenglykol oder einen Polyether bestehend aus Ethylenglykol- und Propylenglykol-Einheiten, wobei die Ethylenglykol- und Propylenglykol-Einheiten blockweise oder statistisch angeordnet sein können.
Vorteilhaft besteht der Polyether aus mindestens 50 Mol-%, bevorzugt mindestens 70 Mol-%, insbesondere mindestens 90 Mol-%, aus Ethylenglykol-Einheiten. Speziell bevorzugt steht [A-O]ₙ für Polyethylenglykol.

Bevorzugt ist n = 5 bis 200, mehr bevorzugt 8 bis 160, insbesondere 9 bis 130, im Speziellen 10 bis 120 oder 12 bis 70.

Bevorzugt ist ein Polyalkylenglykol(meth)acrylat, das durch ein Verfahren hergestellt wurde, in dem weder (Meth)acrylsäure noch das Anhydrid der (Meth)acrylsäure eingesetzt werden.

Das Polyalkylenglykol(meth)acrylat wird durch Umesterung eines Alkyl(meth)acrylates mit einem einseitig verschlossenen Polyalkylenglykol erhalten.
Dadurch ist keine oder nur eine sehr geringe Menge an (Meth)acrylsäure in der Monomermischung vorhanden. Die (Meth)acrylsäure muss daher nicht aufwendig aus der Monomermischung entfernt werden, was Kosten spart und die Bildung von möglicherweise störenden Nebenprodukten vermindert.

In einer Ausführungsform wird das Polyalkylenglykol(meth)acrylat durch Umesterung eines Alkyl(meth)acrylates mit einem einseitig verschlossenen Polyalkylenglykol erhalten.
In diesem Fall steht R² der Formel I für eine C₁- bis C₂₀-Alkylgruppe, -Cyclohexylgruppe oder -Alkylarylgruppe.
Bevorzugt wird in diesem Fall die Monomermischung **M** durch die folgenden Schritte:
- Umestern eines Alkyl(meth)acrylates mit einem einseitig verschlossenem Polyalkylenglykol bis zu einem Umsatz von mindestens 60 mol-%, bezogen auf einseitig verschlossenes Polyalkylenglykol, wobei der gebildete Alkylalkohol kontinuierlich aus der Reaktionsmischung entfernt wird, und
- optional Abdestillieren von überschüssigem Alkyl(meth)acrylat,
erhalten.

Bevorzugt wird für die Umesterung ein Alkyl(meth)acrylat der Formel II und einseitig verschlossenes Polyalkylenglykol der Formel III eingesetzt, 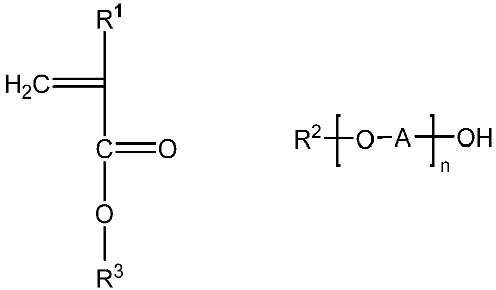 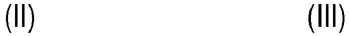 wobei
R¹, R², A, [A-O]ₙ und n wie vorhin beschrieben sind, wobei R² hier nicht für H⁺ steht, und
R³, jeweils unabhängig voneinander für eine Alkylgruppe mit 1 bis 5 Kohlenstoffatomen, bevorzugt für eine Methyl- oder Ethylgruppe, insbesondere für eine Methylgruppe, steht.

Bevorzugt steht n in Formel III für eine Zahl von 10 bis 120, insbesondere 12 bis 70.
Bevorzugt ist das Alkyl(meth)acrylat der Formel II Methylmethacrylat.
Bevorzugt ist das einseitig verschlossene Polyalkylenglykol der Formel III Polyethylenglykol-mono-Methylether.

Die Umesterung wird vorteilhaft mit einem Überschuss an Alkyl(meth)acrylat durchgeführt.
Bevorzugt liegt zu Beginn der Umesterungsreaktion das molare Verhältnis von Alkyl(meth)acrylat zu einseitig verschlossenem Polyalkylenglykol bei 1:1 bis 50:1, insbesondere 1.5:1 bis 20:1, im Speziellen 2:1 bis 10:1.
Durch einen Überschuss an Alkyl(meth)acrylat kann die Reaktionsgeschwindigkeit erhöht und der Reaktionsumsatz verbessert werden.

Vorteilhaft wir die Umesterung bei erhöhter Temperatur, beispielsweise bei 40 bis 100°C durchgeführt.

Vorteilhaft wird ein Veresterungskatalysator für die Umesterung eingesetzt. Alle gängigen Katalysatoren sind prinzipiell geeignet. Geeignete Katalysatoren sind beispielsweise alkalische oder saure Katalysatoren.
Besonders vorteilhafte Katalysatoren sind Alkalimetallhydroxide, Erdalkalimetallhydroxide, Alkalimetallcarbonate, Alkalimetallalkoxide, Schwefelsäure, Sulfonsäuren wie p-Toluolsulfonsäure, stark basische oder saure lonentauscher, Phosphor-Verbindungen wie beispielsweise Phosphorsäure, Phosphonsäure oder hypophosphorige Säure oder deren Salze, oder Titan- oder Zirkoniumverbindungen. Solche Umesterungs-Katalysatoren sind dem Fachmann bekannt.
Wird ein Katalysator eingesetzt, der eine lebende radikalische Polymerisation, insbesondere mittels RAFT-Mechanismus, stört, so wird er vorteilhaft aus der Reaktionsmischung entfernt, bevor sie zur Herstellung des Kammpolymers eingesetzt wird.
Bevorzugt ist ein Katalysator, der die lebende radikalische Polymerisation nicht stört und daher nicht zwingend aus der Reaktionsmischung abgetrennt werden muss.

Um eine Polymerisation des Alkyl(meth)acrylates und/oder des Polyalkylenglykol(meth)acrylates während der Umesterung zu verhindern wird vorteilhaft ein Polymerisationsinhibitor eingesetzt. Polymerisationsinhibitoren sind dem Fachmann bekannt. Nicht einschränkende Beispiele für Inhibitoren sind Hydrochinon, Hydrochinonmethylether, Phenothiazin oder Phenole.
Die Dosierung des Inhibitors wird vorteilhaft so hoch gewählt, dass eine Polymerisation der Monomeren während der Umesterungsreaktion verhindert wird, aber nur so hoch, dass für eine anschliessende Polymerisation die Dosierung der Polymerisationsinitiatoren nicht übermässig hoch liegt.
Bevorzugt wird während und/oder nach der Umesterung überschüssiges Alkyl(meth)acrylat teilweise oder vollständig aus der Reaktionsmischung entfernt, insbesondere abdestilliert.
Dies ist speziell dann von Vorteil, wenn ein grosser Überschuss, insbesondere über der 10-fachen molaren Menge, an Alkyl(meth)acrylat bei der Umesterung eingesetzt wurde.
Bevorzugt wird die nach der Umesterung erhaltene Reaktionsmischung ohne weitere Aufarbeitungsschritte für die Polymerisation zur Herstellung des Kammpolymers eingesetzt.
Dies spart Kosten und Zeit.

Die Monomermischung **M** umfasst vorteilhaft die Reaktionsmischung, die durch Umesterung des Alkyl(meth)acrylates mit dem einseitig verschlossenen Polyalkylenglykol erhalten wird und weist neben dem Polyalkylenglykol(meth)-acrylat noch mindestens eine Verbindung, ausgewählt aus der Gruppe umfassend Alkyl(meth)acrylat, einseitig verschlossenes Polyalkylenglykol, Umesterungskatalysator und Polymerisationsinhibitor, auf.

Überraschenderweise kann die Monomermischung, wenn sie durch Umesterung eines Alkyl(meth)acrylates mit einem einseitig verschlossenen Polyalkylenglykol erhalten wurde, ohne spezielle Reinigungsschritte sehr gut für die Herstellung von Kammpolymeren mit Block-oder Gradientenstruktur, insbesondere mittels RAFT-Polymerisation, eingesetzt werden.

Bevorzugt umfasst die Monomermischung **M** Polyalkylenglykol(meth)acrylat und Alkyl(meth)acrylat in einem molaren Verhältnis von 1:0 bis 1:10, bevorzugt 1:0.01 bis 1:8, insbesondere 1:0.1 bis 1:6, im Speziellen 1:0.2 bis 1:4.

Vorteilhaft umfasst die Monomermischung **M** neben dem Polyalkylenglykol-(meth)acrylat noch mindestens ein weiteres, nichtionisches Monomer, welches mit dem Polyalkylenglykol(meth)acrylat copolymerisierbar ist, insbesondere Alkyl(meth)acrylat, Vinylacetat, Styrol und/oder Hydroxyalkyl(meth)acrylat. Diese Monomere können der Monomermischung **M** zu einem beliebigen Zeitpunkt zwischen dem Ende der Umesterungsreaktion und dem Beginn der Polymerisation zugegeben werden.

Bevorzugt liegt die Monomermischung **M** als 10 bis 90 gewichts-%ige, insbesondere 20 bis 60 gewichts-%ige, Lösung vor. Hierfür kann nach der Umesterung der Reaktionsmischung Lösungsmittel zugegeben werden. Bevorzugte Lösungsmittel sind Wasser oder mit Wasser mischbare organische Flüssigkeiten, bevorzugt Wasser.
Es kann aber auch in speziellen Fällen vorteilhaft sein, wenn die Monomermischung **M** kein Lösungsmittel enthält.

Die wässrige Monomermischung **M** weist vorteilhaft einen pH-Wert von 1.5 bis 10, insbesondere 2 bis 8, auf.

Das Kammpolymere mit Block- oder Gradientenstruktur wird vorteilhaft mittels lebender radikalischer Polymerisation hergestellt.
Die Techniken zur lebenden freien radikalischen Polymerisation sind unter anderem die Nitroxid-vermittelte-Polymerisation (NMP), die Atom-Transfer-Radikalpolymerisation (ATRP) oder die Reversible Additions-Fragmentierungs Kettenübertragungs-Polymerisation (RAFT).
Die lebende freie radikalische Polymerisation erfolgt im Wesentlichen unter Abwesenheit von irreversiblen Übertragungs- oder Abbruchreaktionen. Die Zahl der aktiven Kettenenden ist gering und bleibt während der Polymerisation im Wesentlichen konstant. Dies wird beispielsweise bei der RAFT-Polymerisation durch die Verwendung eines RAFT-Agens und einer nur geringen Menge an Initiator erreicht. Dadurch wird ein im Wesentlichen zeitgleiches und während des gesamten Polymerisationsprozesses anhaltendes Wachstum der Ketten ermöglicht. Dadurch ergibt sich die Möglichkeit, mit diesem Prozess Block- oder Gradientenpolymere herzustellen und es ergibt sich entsprechend eine enge Molekulargewichtsverteilung bzw. Polydispersität des Polymers. Dies ist bei der herkömmlichen "freien radikalischen Polymerisation" bzw. der nicht lebend durchgeführten freien radikalischen Polymerisation nicht möglich.
Bevorzugt wird das Kammpolymer mit Block- oder Gradientenstruktur mittels RAFT-Polymerisation hergestellt.
Vorteilhafte RAFT-Agentien sind Dithioester, Dithiocarbamat, Trithiocarbonat oder Xanthat.
Vorteilhafte Initiatoren sind Azobisisobutyronitril (AIBN), *α*,*α*'-Azodiisobutyramidine dihydrochloride (AAPH) oder Azo-bis-isobutyramidin (AIBA).

Bevorzugt erfolgen die Polymerisation der Monomermischung **M** zur Bildung des mindestens einen Abschnitts **A** und die weiteren Schritte zur Herstellung des Kammpolymers mittels lebender freier radikalischer Polymerisation, bevorzugt RAFT-Polymerisation, insbesondere direkt im Anschluss an die Umesterung, bevorzugt im gleichen Reaktor.
Dadurch können Lagerkosten, Transportkosten und Zeit gespart werden.

Bevorzugt erfolgt die Polymerisation der Monomermischung **M** zur Bildung des Abschnitts **A** durch die folgenden Schritte:
- Verdünnen der Reaktionsmischung **M,** die durch Umesterung eines Alkyl(meth)acrylates mit einem einseitig verschlossenem Polyalkylenglykol erhaltenen wurde, bevorzugt mit Wasser, auf 10 bis 90 Gewichts-%,
- optional Zugeben eines oder mehrerer Monomere,
- Zugeben eines RAFT-Agens und eines Polymerisationsinitiators zu der Reaktionsmischung, und
- Polymerisieren der Reaktionsmischung bis zu einem Umsatz von 50 bis 95 mol-%, bezogen auf Polyalkylenglykol(meth)acrylat.

Bevorzugt weist das Kammpolymer mit Block- oder Gradientenstruktur folgende Struktureinheiten auf:
4-68 Mol-%, bevorzugt 10-40 Mol-%, Struktureinheiten **S1** der Formel IV,
10-95 Mol-%, bevorzugt 20-85 Mol-%, Struktureinheiten **S2** der Formel V,
0-85 Mol-%, bevorzugt 2-35 Mol-%, Struktureinheiten **S3** der Formel VI und
0-50 Mol-% Struktureinheiten **S4,** 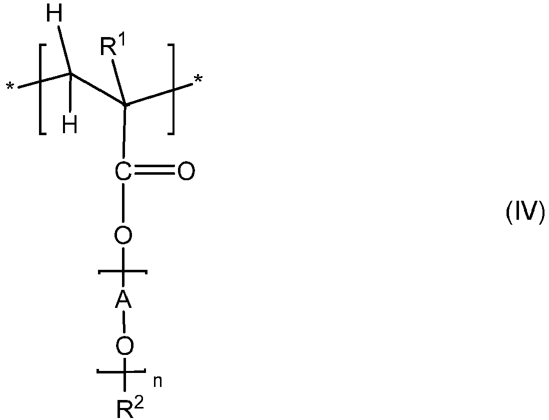 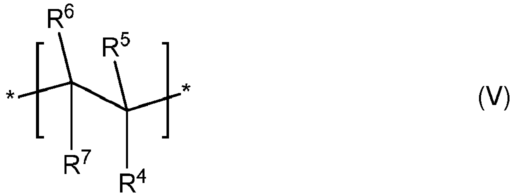 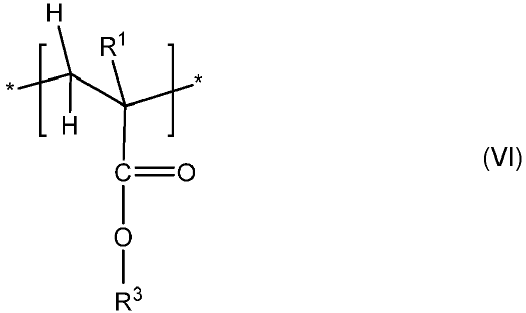 wobei
   R¹, jeweils unabhängig voneinander, für H oder -CH₃ steht,
   R², jeweils unabhängig voneinander, für H, eine C₁- bis C₂₀-Alkylgruppe, -Cyclohexylgruppe oder -Alkylarylgruppe, steht,
   R³, jeweils unabhängig voneinander, für eine Alkylgruppe mit 1 bis 5 Kohlenstoffatomen steht,
   R⁴, jeweils unabhängig voneinander, für -COOM, -SO₂-OM, -O-PO(OM)₂ und/oder -PO(OM)₂ steht,
   R⁵, jeweils unabhängig voneinander, für H, -CH₂COOM oder eine Alkylgruppe mit 1 bis 5 Kohlenstoffatomen steht,
   R⁶, jeweils unabhängig voneinander, für H oder eine Alkylgruppe mit 1 bis 5 Kohlenstoffatomen steht,
   R⁷, jeweils unabhängig voneinander, für H, -COOM oder eine Alkylgruppe mit 1 bis 5 Kohlenstoffatomen steht,
   oder wobei R⁴ mit R⁷ einen Ring bildet zu -CO-O-CO- (Anhydrid),
   M, unabhängig voneinander, für H⁺, Alkalimetallion, Erdalkalimetallion, zwei oder dreiwertiges Metallion, Ammoniumion oder eine organische Ammoniumgruppe steht;
   A = C₂-C₄ Alkylen und
   n = 2 bis 250, und
   Struktureinheit **S4** hergeleitet ist von einem ungesättigten Monomer das in das Kammpolymer einpolymerisierbar ist, insbesondere Vinylacetat, Styrol und/oder Hydroxyalkyl(meth)acrylat.

Die Struktureinheit **S1** liegt vorwiegend in dem Abschnitt **A** und die Struktureinheit **S2** vorwiegend in einem anderen als dem Abschnitt **A** des Kammpolymers vor. Die Struktureinheiten **S3** und **S4** können, unabhängig voneinander, in allen Abschnitten des Kammpolymers mit Block- oder Gradientenstruktur vorliegen.

Besonders vorteilhaft sind Kammpolymere mit Block- oder Gradientenstruktur umfassend die Struktureinheiten **S1, S2** und optional **S3** und/oder **S4,** bei denen
R¹ und R⁵, jeweils unabhängig voneinander, für H oder -CH₃ stehen,
R² und R³ für -CH₃ stehen,
R⁴ für -COOM steht,
R⁶ und R⁷ für H stehen,
A, jeweils unabhängig voneinander für Ethenyl oder Propenyl, bevorzugt Ethenyl, steht,
n = 5 bis 200, insbesondere 10 bis 120, und
M, unabhängig voneinander, für H⁺, Alkalimetallion oder Erdalkalimetallion steht.

In einer bevorzugten Ausführungsform besteht das Kammpolymer mit Block- oder Gradientenstruktur aus Struktureinheiten **S1** und **S2.**
Es kann ebenfalls vorteilhaft sein, wenn das Kammpolymer die Struktureinheiten **S1, S2** und **S3** enthält.
Vorteilhaft beträgt das molare Verhältnis von Struktureinheit **S1** zu Struktureinheit **S2** in dem Kammpolymer 1:0.5 bis 1:6, bevorzugt 1:0.7 bis 1:5, insbesondere 1:0.9 bis 1:4.5, weiter bevorzugt 1:1 bis 1:4, oder 1:2 bis 1:3.5.
Vorteilhaft beträgt das molare Verhältnis von Struktureinheit **S1** zu Struktureinheit **S3** in dem Kammpolymer 1:0 bis 1:10, bevorzugt 1:0.01 bis 1:8, insbesondere 1:0.1 bis 1:6, im Speziellen 1:0.2 bis 1:4.
Vorteilhaft ist die Struktureinheit **S4** in 0 bis 50 Mol-%, insbesondere 2 bis 35 Mol-%, im Speziellen 3 bis 30 Mol-%, oder 5 bis 20 Mol-%, bezogen auf die Summe aller Struktureinheiten **S1, S2, S3** und **S4,** im Kammpolymer vorhanden.

Vorteilhaft wird der mindestens eine Abschnitt **A** des Kammpolymers mit Block-oder Gradientenstruktur im Mittel zu mindestens 90 Mol-%, bevorzugt mindestens 95 Mol-%, insbesondere mindestens 98 Mol-%, bezogen auf alle Struktureinheiten im Abschnitt **A,** aus Struktureinheiten **S1, S3** und/oder **S4** gebildet, wobei Struktureinheit **S1** zu mindestens 10 Mol-%, bevorzugt mindestens 20 Mol-%, mehr bevorzugt mindestens 50 Mol-%, in dem Abschnitt **A** vorhanden ist. Bevorzugt besteht der mindestens eine Abschnitt A zu mindestens 90 Mol-% aus Struktureinheiten **S1** und **S3,** wobei Struktureinheit **S1** zu mindestens 10 Mol-%, bevorzugt mindestens 20 Mol-%, mehr bevorzugt mindestens 50 Mol-%, in dem Abschnitt **A** vorhanden ist.
Bevorzugt besteht der mindestens eine Abschnitt **A der** Polymerkette zu mindestens 90 Mol-%, mehr bevorzugt 95 Mol-%, aus Struktureinheiten **S1.** Kammpolymere mit solcher Struktur sind speziell gut als Dispergiermittel für feine Pulver geeignet.
Bevorzugt umfasst das Kammpolymer mit Block- oder Gradientenstruktur neben dem mindestens einen Abschnitt **A** noch mindestens einen Abschnitt **B.** Bevorzugt liegt der mindestens eine Abschnitt **A** am Anfang der Polymerkette, wobei mit "Anfang der Polymerkette" der Bereich des Polymerrückrates gemeint ist, der bei der lebenden radikalischen Polymerisation zuerst gebildet wird.
Bevorzugt liegt der mindestens eine Abschnitt **B** am Ende der Polymerkette, wobei mit "Ende der Polymerkette" der Bereich des Polymerrückrates gemeint ist, der bei der lebenden radikalischen Polymerisation zuletzt gebildet wird. Der Abschnitt **B** liegt daher bevorzugt am anderen Ende der Polymerkette im Vergleich zu Abschnitt **A.**
Bevorzugt weist der mindestens eine Abschnitt **B** im Mittel mindestens 40 Mol-%, insbesondere mindestens 60 Mol-%, im Speziellen mindestens 80 Mol-%, bezogen auf alle Struktureinheiten im Abschnitt **B,** Struktureinheiten **S2** auf. Bevorzugt weist der mindestens eine Abschnitt **B** maximal 60 Mol-%, insbesondere maximal 50 Mol-%, bevorzugt maximal 40 Mol-% Struktureinheiten **S1** auf.

Bevorzugt wird der mindestens eine Abschnitt **B** direkt durch Weiterführung der lebenden freien radikalischen Polymerisation, bei der die Monomermischung **M** zu dem Abschnitt **A** polymerisiert wurde, durch die Schritte:
- Zugeben oder Zudosieren mindestens eines Säuregruppen umfassenden Monomers und optional weiterer Monomere zur Reaktionsmischung, welche nach der Polymerisation der Monomermischung **M** zu Abschnitt **A** vorliegt, und
- Weiterpolymerisieren der so erhaltenen Mischung bis mindestens 90 mol-% Umsatz, bezogen auf Säuregruppen umfassendes Monomer,
gebildet.

Vorteilhaft weist jeweils ein Abschnitt der Polymerkette, unabhängig voneinander, mindestens 5, insbesondere mindestens 7, im Speziellen mindestens 10, Struktureinheiten auf.
Bevorzugt weist ein Abschnitt **A** 5-70, insbesondere 7-60, bevorzugt 20-50, Struktureinheiten auf.
Bevorzugt weist ein Abschnitt **B** 5-70, insbesondere 7-60, bevorzugt 20-50, Struktureinheiten auf.

Vorteilhaft weist das Kammpolymer noch einen Abschnitt **C** auf.
Der Abschnitt **C** liegt vorteilhaft zwischen den Abschnitten **A** und **B.** Der Abschnitt **C** bildet in diesem Fall bevorzugt einen Zwischenbereich zwischen den Strukturen des Abschnittes **A** und denen des Abschnittes **B.**
Der Abschnitt **C** umfasst als Zwischenbereich bevorzugt Struktureinheiten die auch in den Abschnitten **A** und **B** vorhanden sind.
Der Abschnitt **C** kann auch einen selbstständigen Bereich mit vorwiegend Struktureinheiten **S3** und/oder **S4** umfassen.
Der Abschnitt **C** kann auch anschliessend an die Abschnitte **A** und **B** vorliegen und vorwiegend Struktureinheiten **S3** und/oder **S4** umfassen.

Vorteilhaft weist das Kammpolymer eine Polydispersität von unter 1.5, bevorzugt im Bereich von 1.0 bis 1.4, insbesondere im Bereich von 1.1 bis 1.3, auf.
Unter Polydispersität wird das Verhältnis von gewichtsgemitteltem Molekulargewicht Mw zu zahlengemitteltem Molekulargewicht Mn, beides in g/mol, verstanden.
Das gewichtsgemittelte Molekulargewicht Mw des gesamten Kammpolymers liegt insbesondere im Bereich von 8'000 bis 100'000 g/mol, vorteilhafterweise 10'000 bis 80'000 g/mol, im Speziellen 12'000 bis 50'000 g/mol.

Im vorliegenden Zusammenhang werden Molekulargewichte, wie das gewichtsgemittelte Molekulargewicht Mw und das zahlengemittelte Molekulargewicht Mn, durch Gel-Permeations-Chromatographie (GPC) mit Polyethylenglykol (PEG) als Standard bestimmt.

Ein Verfahren zur Herstellung von Kammpolymeren mit verbesserter Block- oder Gradientenstruktur umfasst die folgenden Schritte:
i) Umestern eines Alkyl(meth)acrylates, insbesondere Methylmethacrylat, mit einem einseitig verschlossenen Polyalkylenglykol, insbesondere Polyethylenglykol-mono-Methylether, mit 2 bis 250, bevorzugt 10 bis 120, mehr bevorzugt 12 bis 70, Alkylenglykol-Einheiten, bis zu einem Umsatz von mindestens 60 mol-%, bevorzugt mindestens 70 mol-%, insbesondere mindestens 80 mol-%, im Speziellen mindestens 90 mol-%, bezogen auf einseitig verschlossenes Polyalkylenglykol, wobei das molare Verhältnis von Alkylmethacrylat zu einseitig verschlossenem Polyalkylenglykol bevorzugt 1:1 bis 50:1, insbesondere 1.5:1 bis 20:1, im Speziellen 2:1 bis 10:1, beträgt, wobei der gebildete Alkylalkohol kontinuierlich aus der Reaktionsmischung entfernt wird,
ii) optional Abdestillieren von überschüssigem Alkyl(meth)acrylat, insbesondere bis zum Erreichen von einem maximalen molaren Verhältnis von Alkyl(meth)acrylat zu Polyalkylenglykol(meth)acrylat von 10:1,
iii) Verdünnen der erhaltenen Reaktionsmischung, bevorzugt mit Wasser, auf 10 bis 90, insbesondere 20 bis 60, Gewichts-%,
iv) optional Zugeben eines oder mehrerer Monomere, insbesondere ausgewählt aus der Gruppe umfassend Alkyl(meth)acrylat, Vinylacetat, Styrol und Hydroxyalkyl(meth)acrylat,
v) Zugeben eines RAFT-Agens und eines Polymerisationsinitiators zu der Reaktionsmischung,
vi) Polymerisieren der Reaktionsmischung bis zu einem Umsatz von 50 bis 95 mol-%, bezogen auf Polyalkylenglykol(meth)acrylat,
vii) Zugeben oder Zudosieren mindestens eines Säuregruppen umfassenden Monomers und optional weiterer Monomere, insbesondere ausgewählt aus der Gruppe umfassend Alkyl(meth)-acrylat, Vinylacetat, Styrol und Hydroxyalkyl(meth)acrylat, bevorzugt Hydroxyethylacrylat, zur Reaktionsmischung und
viii) Weiterpolymerisieren der so erhaltenen Mischung bis mindestens 90 mol-% Umsatz, bezogen auf Säuregruppen umfassendes Monomer.

Das Säuregruppen umfassende Monomer ist bevorzugt ein Monomer, das in polymerisierter Form durch die Struktureinheit **S2** der Formel V dargestellt ist. Das Säuregruppen umfassende Monomer ist bevorzugt Acrylsäure und/oder Methacrylsäure, mehr bevorzugt Methacrylsäure.

Die Schritte zur Herstellung des Polyalkylenglykol(meth)acrylates, das sind Schritt i und ii, können hierbei getrennt von der Polymerisation, das sind Schritt v bis viii, durchgeführt werden, insbesondere räumlich getrennt in unterschiedlichen Reaktoren, und/oder zeitlich durch mehrere Stunden, Tage oder Wochen getrennt. Die Schritte iii und iv können hierbei, jeweils unabhängig voneinander, entweder direkt im Anschluss an Schritt ii, insbesondere im selben Reaktor, oder zeitlich und/oder räumlich getrennt bis erst kurz vor Schritt v durchgeführt werden. Die räumliche Trennung der Herstellung des Polyalkylenglycol(meth)acrylates von der Polymerisation kann zu einer besseren Auslastung der Reaktoren führen und damit zu einer Kostenersparnis.
Es kann aber auch vorteilhaft sein, wenn alle Schritte i bis viii in ein und demselben Reaktor zeitlich direkt aufeinander folgend durchgeführt werden. Dies kann ebenfalls Kosten und Zeit sparen, beispielsweise für Transport und Lagerhaltung.

Ein weiterer Gegenstand der Erfindung ist die Verwendung des Kammpolymers, hergestellt nach einem erfindungsgemässen Verfahren, als Dispergiermittel für feine Pulver, insbesondere für anorganische Bindemittel.

Ein geeignetes anorganisches Bindemittel ist insbesondere ein Bindemittel, welches in Anwesenheit von Wasser in einer Hydratationsreaktion zu festen Hydraten oder Hydratphasen reagiert.
Speziell vorteilhaft ist die Verwendung des Kammpolymers als Dispergiermittel für ein hydraulisches Bindemittel, welches mit Wasser auch unter Wasser erhärtbar ist, wie insbesondere Zement oder ein latent-hydraulisches Bindemittel, welches unter dem Einwirken von Zusätzen mit Wasser abbindet, wie insbesondere Hüttensand, oder ein puzzolanisches Bindemittel, wie insbesondere Flugasche oder Silicastaub, oder auch Gips-Halbhydrat oder Anhydrit.
Besonders vorteilhaft ist die Verwendung in zementösen Anwendungen, insbesondere Zementpasten, Mörtel oder Beton.
Die Kammpolymere, hergestellt nach einem erfindungsgemässen Verfahren, zeigen in diesen Anwendungen ausgezeichnete Verflüssigungswirkung und keine oder nur geringe Verzögerung des Abbindens.

Ein weiterer Gegenstand der Erfindung ist ein Formkörper, insbesondere ein Bestandteil eines Bauwerkes, erhältlich durch Aushärten einer wässrigen anorganischen Bindemittelzusammensetzung umfassend mindestens ein anorganisches Bindemittel und ein Kammpolymer, hergestellt nach einem Verfahren wie vorhergehend beschrieben.
Ein Bauwerk kann z.B. eine Brücke, ein Gebäude, ein Tunnel, eine Fahrbahn, oder eine Start- und Landebahn sein.

Die beschriebenen Kammpolymere eigenen sich aber auch hervorragend zur Dispergierung von nicht-hydraulisch abbindenden Pulvern. Beispiele für solche Pulver sind Calciumcarbonat, Calciumhydroxid, Calcium-Silikat-Hydrat (CSH)-Partikel, Kohlestäube, Pigmente, gemahlener Zement, Gips-Dihydrat oder Titandioxid.

Aus den nachfolgenden Ausführungsbeispielen ergeben sich weitere vorteilhafte Ausführungsformen der Erfindung.

### Beispiele

### Bestimmung von Molekulargewicht und Polydispersität der Polymere sowie des Feststoffgehalts der Polymerlösungen

Das gewichtsgemittelte **Molekulargewicht** Mw und das zahlengemittelte Molekulargewicht Mₙ der Polymere wurden durch Gel-Permeations-Chromatographie (GPC) mit Polyethylenglykol (PEG) als Standard bestimmt.
Verwendete Säulenkaskade: drei 8 x 300 mm Suprema GPC Säulen (10 µm, 2 x 1000 Å, 1 x 30 Å, mit Vorsäule), von PSS Polymer Standards Service, Deutschland,
Eluent: 0.1N NaNO₃-Lösung, deren pH mit NaOH auf 12 eingestellt ist,
Flussrate: 0.8 ml/min,
Detektor: RI-Detektor 2414 von Waters, USA,
Temperatur von Säulenofen und Detektor: 45 °C.

Die **Polydispersität** wurde als Verhältnis M_{w}/Mₙ berechnet.

Der **Feststoffgehalt** der Lösungen wurde mit einem Halogentrockner Typ HG 63 der Firma Mettler Toledo, Schweiz, bestimmt.

### Herstellung der Monomermischung M1

In einem Dreihalskolben, ausgestattet mit einem Thermometer, Rührer und einer Vigreux-Kolonne mit Destillationsaufsatz, wurden 60.1 g (0.6 mol) Methylmethacrylat und 150 g (0.3 mol) Polyethylenglykolmonomethylether (M_{w} 500) gemischt und anschliessend unter Rühren 2.94 g konzentrierte Schwefelsäure und 2.1 g Phenothiazin zugegeben. Die Reaktionsmischung wurde unter Rühren auf 120 °C erwärmt. Das während der Reaktion entstehende Methanol wurde kontinuierlich abdestilliert. Nach 8 Stunden wurde die Temperatur auf 135 °C erhöht und das Methanol und verbliebenes Methylmethacrylat abdestilliert.

### Herstellung des Kammpolymers P1 mit Block-Struktur

Die Monomermischung M1 wurde im Anschluss an die Herstellung im gleichen Reaktionsgefäss mit 600 ml Wasser verdünnt und auf 80 °C erwärmt. Ein leichter Inertgasstrom (N₂) wurde während des Aufwärmens und der ganzen restlichen Reaktionsdauer durch die gerührte Lösung geführt. Es wurden 7.7 g 4-Cyano-4-(thiobenzoylthio)pentansäure (0.027 mol; RAFT-Agens) zugegeben. Nachdem sich die Substanz vollständig gelöst hatte, wurden 1.34 g Azobisisobutyronitril (0.008 mol) zugegeben. Von nun an wurde der Umsatz mittels HPLC regelmässig bestimmt. Sobald die Umsetzung, bezogen auf Methoxy-Polyethylenglykol-Methacrylat, über 85 % betrug, wurden dem Reaktionsgemisch 95.3 g Methacrylsäure (1.1 mol) zugegeben. Nach 2.5 Stunden war die gesamte Methacrylsäure gemäss HPLC-Messung abreagiert.

Es wurde eine rötliche Polymerlösung erhalten. Das Molekulargewicht M_{w} des Polymers betrug 36'200 g/mol und die Polydispersität 1.21.

### Herstellung des Kammpolymers P2 mit Gradientenstruktur

Die Herstellung der Monomermischung M1 wurde in der gleichen Menge wie oben beschrieben wiederholt. Im Anschluss an die Herstellung wurde die Reaktionsmischung im gleichen Reaktionsgefäss mit 600 ml Wasser verdünnt und auf 80°C erwärmt. Ein leichter Inertgasstrom (N₂) wurde während des Aufwärmens und der ganzen restlichen Reaktionsdauer durch die gerührte Lösung geführt. Es wurden 7.7 g 4-Cyano-4-(thiobenzoylthio)pentansäure (0.027 mol; RAFT-Agens) zugegeben. Nachdem sich die Substanz vollständig gelöst hatte, wurden 1.34 g Azobisisobutyronitril (0.008 mol) zugegeben. Von nun an wurde der Umsatz mittels HPLC regelmässig bestimmt. Sobald die Umsetzung, bezogen auf Methoxy-Polyethylenglykol-Methacrylat, über 50 % betrug, wurden 95.3 g Methacrylsäure (1.1 mol) innert 20 Minuten dem Reaktionsgemisch zugetropft. Die Reaktionsmischung wurde anschliessend noch 2 Stunden bei 80 °C gerührt.

Es wurde eine rötliche Polymerlösung erhalten. Das Molekulargewicht M_{w} des Polymers betrug 35'900 g/mol und die Polydispersität 1.20.

### Monomermischungen M2 bis M9

Die für die Herstellung von Kammpolymeren verwendeten Monomermischungen M2 bis M9 hatten die in Tabelle 1 gezeigte Zusammensetzung. Erfindungsgemässe Monomermischungen M2 bis M5 wurden auf dieselbe Weise hergestellt wir die erfindungsgemässe Monomermischung M1. Die nicht erfindungsgemässen Monomermischungen M6 bis M9 wurden durch einfaches Vermischen der jeweiligen Monomeren erhalten.

Tabelle 1 zeigt die Zusammensetzung der Monomermischungen M2 bis M9 in Mol-%, den Wassergehalt der Mischungen in Gewichts-%, sowie die Gewichts-% Methacrylsäure bezogen auf Methoxy-Polyethylenglykol-1000-Methacrylat.

**Tabelle 1**

| Monomermischung | MPEG-1000MA¹⁾ | Methylmethacrylat | Methacryl säure | Wasser - gehalt | Gewichts-% MAS²⁾ |
|---|---|---|---|---|---|
| M2 | 100 | 0 | 0 | 60 | - |
| M3 | 90 | 10 | 0 | 60 | - |
| M4 | 50 | 50 | 0 | 56 | - |
| M5 | 25 | 75 | 0 | 48 | - |
| M6 | 90 | 0 | 10 | 59 | 0.9 |
| M7 | 80 | 0 | 20 | 59 | 2.0 |
| M8 | 70 | 0 | 30 | 59 | 3.5 |
| M9 | 50 | 0 | 50 | 57 | 8.1 |

| | | | | | |
|---|---|---|---|---|---|
| ¹⁾ Methoxy-Polyethylenglykol-Methacrylat mit einem mittleren Molekulargewicht der Polyethylenglykolkette von etwa 1'000 g/mol (entspricht etwa 23 Ethylenglykol-Einheiten). ²⁾ Gewichts-% Methacrylsäure bezogen auf das Gewicht von Methoxy-Polyethylenglykol-1000-Methacrylat. | | | | | |

### Herstellung des Kammpolymers P3 mit Block-Struktur

Zur Herstellung des Kammpolymers P3 wurden in einem Rundkolben, ausgestattet mit einem Rückflusskühler, Rührwerk, Thermometer und einem Inertgaseinleitungsrohr, 800 g der Monomermischung M2 (0.3 mol) vorgelegt. Das Reaktionsgemisch wurde unter Rühren auf 80 °C erwärmt. Ein leichter Inertgasstrom (N₂) wurde während des Aufwärmens und der ganzen restlichen Reaktionsdauer durch die Lösung geführt. Es wurden 7.7 g 4-Cyano-4-(thiobenzoylthio)pentansäure (0.027 mol; RAFT-Agens) zugegeben. Nachdem sich die Substanz vollständig gelöst hatte, wurden 1.34 g Azobisisobutyronitril (0.008 mol) zugegeben. Von nun an wurde der Umsatz mittels HPLC regelmässig bestimmt. Sobald die Umsetzung, bezogen auf Methoxy-Polyethylenglykol-Methacrylat, über 85 % betrug, wurden dem Reaktionsgemisch 95.3 g Methacrylsäure (1.1 mol) zugegeben. Es wurde für weitere 2 Stunden reagieren gelassen. Nach dem Abkühlen wurde eine rötliche Polymerlösung erhalten, die durch Zugabe von Wasser auf einen Feststoffgehalt von etwa 40 Gewichts-% eingestellt wurde.

### Herstellung der Kammpolymere P4 bis P10 mit Block-Struktur

Die Kammpolymere P4 bis P10 wurden analog zu Kammpolymer P3 hergestellt, aber anstelle der Monomermischung M2 wurden für die Kammpolymere P4 bis P10 die Monomermischungen M3 bis M9, wie in Tabelle 1 gezeigt, verwendet. Es wurde jeweils solch eine Menge an Monomermischung eingesetzt, die 0.3 Mol Gesamtmonomer enthielt.

### Tests im Mörtel

### Herstellung der Mörtelmischungen

Die zu Testzwecken eingesetzte Mörtelmischung weist die in Tabelle 2 beschriebene Trockenzusammensetzung auf.

**Tabelle 2: Trockenzusammensetzung der Mörtelmischung**

| Komponente | Menge |
|---|---|
| Zement (CEM I 42.5) | 750 g |
| Kalksteinfüller | 141 g |
| Sand 0-1 mm | 738 g |
| Sand 1-4 mm | 1'107 g |
| Sand 4-8 mm | 1'154 g |

Zum Anmachen einer Mörtelmischung wurden die Sande, der Kalksteinfüller und der Zement 1 Minute in einem Hobart-Mischer trocken gemischt. Innerhalb von 30 Sekunden wurden 352.5 g Anmachwasser, dem vorgängig das jeweilige Polymer gemäss Tabelle 3 beigemischt worden war, zugegeben und noch weitere 2.5 Minuten gemischt. Die Gesamtmischzeit nass dauerte jeweils 3 Minuten.

### Bestimmung der Dispergierwirkung

Zur Bestimmung der Dispergierwirkung der Polymere wurde jeweils das Ausbreitmass von angemachten Mörtelmischungen zu verschiedenen Zeiten gemessen. Das Ausbreitmass des Mörtels wurde gemäss EN 1015-3 bestimmt.

### Resultate der Mörteltests

Tabelle 3 gibt eine Übersicht über die durchgeführten Mörteltests (T1 bis T8). Die Dosierung des jeweiligen Kammpolymers betrug 0.5 Gewichts-% einer 40 gewichts-%igen Polymerlösung, bezogen auf das Gewicht des Zementes. Der W/Z (Gewichtsverhältnis von Wasser zu Zement) war 0.47.

**Tabelle 3: Resultate der Mörteltests**

| | Kammpolymer | Monomermischung | Ausbreitmass [mm] nach x Minuten | | | | |
|---|---|---|---|---|---|---|---|
| | | | 0 | 30 | 60 | 90 | 120 |
| T1 | P3 | M2 | 220 | 165 | 141 | 138 | 128 |
| T2 | P4 | M3 | 240 | 191 | 170 | 141 | 130 |
| T3 | P5 | M4 | 205 | 159 | 145 | 137 | 128 |
| T4 | P6 | M5 | 235 | 196 | 171 | 143 | 135 |
| T5 | P7 | M6 | 219 | 166 | 147 | 133 | 126 |
| T6 | P8 | M7 | 143 | 127 | - ¹⁾ | - | - |
| T7 | P9 | M8 | 143 | 126 | - | - | - |
| T8 | P10 | M9 | 138 | 124 | - | - | - |

| | | | | | | | |
|---|---|---|---|---|---|---|---|
| ¹⁾..- schlecht verarbeitbar, zu steif | | | | | | | |

## Patentansprüche

1. Verfahren zur Herstellung von Kammpolymeren mit Block- oder Gradientenstruktur, **gekennzeichnet durch** die Schritte:
- Umestern eines Alkyl(meth)acrylates mit einem einseitig verschlossenem Polyalkylenglykol bis zu einem Umsatz von mindestens 60 mol-%, bezogen auf einseitig verschlossenes Polyalkylenglykol, wobei der gebildete Alkylalkohol kontinuierlich aus der Reaktionsmischung entfernt wird,
- optional Abdestillieren von überschüssigem Alkyl(meth)acrylat,
- Verdünnen der erhaltenen Reaktionsmischung, bevorzugt mit Wasser, auf 10 bis 90 Gewichts-%,
- optional Zugeben eines oder mehrerer Monomere,
- Zugeben eines RAFT-Agens und eines Polymerisationsinitiators zu der Reaktionsmischung,
- Polymerisieren der Reaktionsmischung bis zu einem Umsatz von 50 bis 95 mol-%, bezogen auf Polyalkylenglykol(meth)acrylat,
- Zugeben oder Zudosieren mindestens eines Säuregruppen umfassenden Monomers und optional weiterer Monomere zur Reaktionsmischung und
- Weiterpolymerisieren der so erhaltenen Mischung bis mindestens 90 mol-% Umsatz, bezogen auf Säuregruppen umfassendes Monomer.

2. Verfahren gemäss Anspruch 1, **dadurch gekennzeichnet, dass** zu Beginn der Umesterungsreaktion das molare Verhältnis von Alkyl(meth)acrylat zu einseitig verschlossenem Polyalkylenglykol bei 1:1 bis 50:1, insbesondere 1.5:1 bis 20:1, im Speziellen 2:1 bis 10:1 liegt.

3. Verfahren gemäss einem der vorhergehenden Ansprüche, **dadurch gekennzeichnet, dass** für die Umesterung ein Veresterungskatalysator eingesetzt wird, ausgewählt aus Alkalimetallhydroxide, Erdalkalimetallhydroxide, Alkalimetallcarbonate, Alkalimetallalkoxide, Schwefelsäure, Sulfonsäuren wie p-Toluolsulfonsäure, stark basische oder saure lonentauscher, Phosphor-Verbindungen wie beispielsweise Phosphorsäure, Phosphonsäure oder hypophosphorige Säure oder deren Salze, oder Titan- oder Zirkoniumverbindungen.

4. Verfahren gemäss einem der vorhergehenden Ansprüche, **dadurch gekennzeichnet, dass** während der Umesterung ein Polymerisationsinhibitor eingesetzt wird.

5. Verfahren gemäss einem der vorhergehenden Ansprüche, **dadurch gekennzeichnet, dass** das Kammpolymer mit Block- oder Gradientenstruktur folgende Struktureinheiten aufweist:
4-68 Mol-%, bevorzugt 10-40 Mol-%, Struktureinheiten **S1** der Formel IV,
10-95 Mol-%, bevorzugt 20-85 Mol-%, Struktureinheiten **S2** der Formel V,
0-85 Mol-%, bevorzugt 2-35 Mol-%, Struktureinheiten **S3** der Formel VI und
0-50 Mol-% Struktureinheiten **S4,** 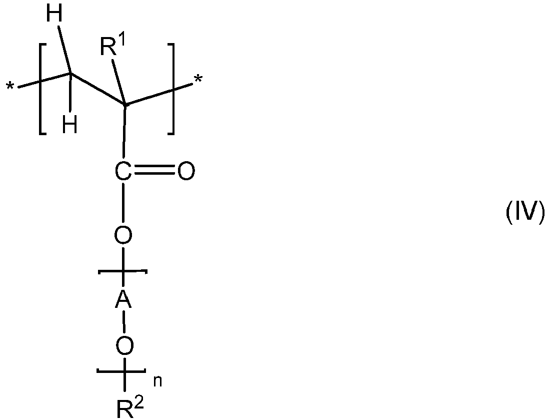 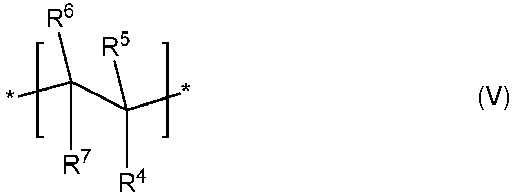 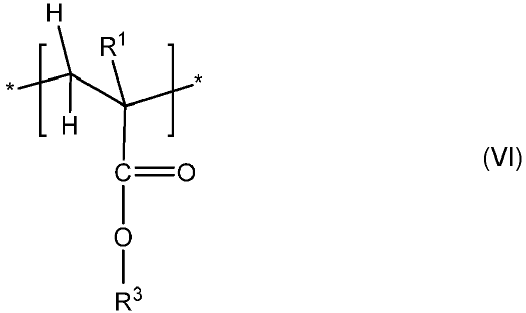 wobei
R¹, jeweils unabhängig voneinander, für H oder -CH₃ steht,
R², jeweils unabhängig voneinander, für H, eine C₁- bis C₂₀-Alkylgruppe, -Cyclohexylgruppe oder -Alkylarylgruppe, steht,
R³, jeweils unabhängig voneinander, für eine Alkylgruppe mit 1 bis 5 Kohlenstoffatomen steht,
R⁴, jeweils unabhängig voneinander, für -COOM, -SO₂-OM, -O-PO(OM)₂ und/oder -PO(OM)₂ steht,
R⁵, jeweils unabhängig voneinander, für H, -CH₂COOM oder eine Alkylgruppe mit 1 bis 5 Kohlenstoffatomen steht,
R⁶, jeweils unabhängig voneinander, für H oder eine Alkylgruppe mit 1 bis 5 Kohlenstoffatomen steht,
R⁷, jeweils unabhängig voneinander, für H, -COOM oder eine Alkylgruppe mit 1 bis 5 Kohlenstoffatomen steht,
oder wobei R⁴ mit R⁷ einen Ring bildet zu -CO-O-CO- (Anhydrid),
M, unabhängig voneinander, für H⁺, Alkalimetallion, Erdalkalimetallion, zwei oder dreiwertiges Metallion, Ammoniumion oder eine organische Ammoniumgruppe steht;
A = C₂-C₄ Alkylen und
n = 2 bis 250, und
Struktureinheit **S4** hergeleitet ist von einem ungesättigten Monomer das in das Kammpolymer einpolymerisierbar ist, insbesondere Vinylacetat, Styrol und/oder Hydroxyalkyl(meth)acrylat.

6. Verfahren gemäss Anspruch 5, dadruch gekennzeichnet, dass mindestens ein Abschnitt **A** des Kammpolymers mit Block- oder Gradientenstruktur im Mittel zu mindestens 90 Mol-%, bevorzugt mindestens 95 Mol-%, insbesondere mindestens 98 Mol-%, bezogen auf alle Struktureinheiten im Abschnitt **A,** aus Struktureinheiten **S1, S3** und/oder **S4** gebildet, wobei Struktureinheit **S1** zu mindestens 10 Mol-%, bevorzugt mindestens 20 Mol-%, mehr bevorzugt mindestens 50 Mol-%, in dem Abschnitt **A** vorhanden ist.

7. Verwendung des Kammpolymers hergestellt nach einem Verfahren gemäss einem der vorhergehenden Ansprüche als Dispergiermittel für feine Pulver, insbesondere für anorganische Bindemittel.

8. Formkörper, insbesondere ein Bestandteil eines Bauwerkes, erhältlich durch Aushärten einer wässrigen anorganischen Bindemittelzusammensetzung umfassend mindestens ein anorganisches Bindemittel und ein Kammpolymer, hergestellt nach einem Verfahren gemäss einem der Ansprüche 1 bis 6.
